# EUROPÄISCHE PATENTSCHRIFT

(11) **EP 1 436 059 B1**
(45) Veröffentlichungstag und Bekanntmachung des Hinweises auf die Patenterteilung: **18.01.2012**
(21) Anmeldenummer: 02779164.9
(22) Anmeldetag: 18.10.2002
(51) Int. Cl.: B01D 17/035

(54) **SANDFANG**
SAND CATCHER
DESSABLEUR

(30) Priorität: 18.10.2001 DE 10151498; 13.05.2002 DE 10221232
(43) Veröffentlichungstag der Anmeldung: 14.07.2004
(73) Patentinhaber: Werkstoff + Funktion Grimmel Wassertechnik GmbH, 61239 Ober-Mörlen (DE)
(72) Erfinder: GRIMMEL, Walter, 61239 Ober-Mörlen (DE)
(74) Vertreter: Hebing, Norbert
(86) Internationale Anmeldenummer: PCT/DE2002/003939
(87) Internationale Veröffentlichungsnummer: WO 2003/035210

(56) Entgegenhaltungen:
- EP-A- 0 685 431
- DE-A- 3 207 658
- US-A- 4 670 142

## Beschreibung

Die Erfindung betrifft einen Sandfang mit einer in Längsrichtung durchströmten, einen Schmutzwassereinlauf und einen Wasserablauf aufweisenden Abscheidekammer, welche zur Erzeugung einer Umwälzbewegung des Wassers quer zur Längsrichtung der Abscheidekammer an einer Längsseite Luftzuführdüsen hat und im unteren Bereich mit einer in Längsrichtung verlaufenden Sandsammelrinne versehen ist, wobei der Schmutzwassereinlauf zur Erzeugung der Umwälzbewegung des Wassers quer zu der Abscheidekammer im oberen Bereich in diese hineinführt und die Luftzuführdüsen an der Seite des Schmutzwassereinlaufes unterhalb des Schmutzwassereinlaufes vorgesehen sind.

Ein Sandfang der vorstehenden Art ist in der US 4,670,142 beschrieben.

Die Abscheidekammer wird von einem Trog aus Stahlbeton gebildet, der im Erdreich eingelassen ist und dessen Querschnitt im Wesentlichen quadratisch ist. Der Einlauf endet an einer Seitenwand des Troges, die Luftdüsen sind hinter einer Trennwand angeordnet, wodurch sie im Wesentlichen vertikal aufsteigen und keinen horizontalen Impuls erhalten.

Da der Schmutzwassereinlauf an der Seitenwand der Abscheidekammer endet, geht der Impuls des einströmenden Abwassers schnell verloren.

Ein Sandfang ist auch in der Zeitschrift "gwf", 99. Jahrgang, Heft 22, 30.5.1958, Seiten 535-539, beschrieben. Das Besondere des in dieser Schrift erläuterten, aus Beton bestehenden Sandfangs liegt darin, dass seine Abscheidekammer einen ovalen Querschnitt hat und durch seitliche Luftdüsen eine Umwälzbewegung des Wassers erzeugt wird. Das Schmutzwasser strömt der Abscheidekammer axial zu, wobei die kinetische Energie des zuströmenden Wassers durch eine am Einlauf vorgesehene Prallwand mit Wirbelkammer vernichtet wird, damit sich durch die Luftdüsen die gewünschte Umwälzbewegung ungestört erzeugen lässt.

Nachteilig bei dem bekannten Sandfang ist es, dass die angestrebte Umwälzbewegung nur unvollkommen zu verwirklichen ist und relativ große Mengen Druckluft eingegeben werden müssen. Weiterhin müsste im Idealfall die Luftmenge in Abhängigkeit von der einlaufenden Schmutzwassermenge geregelt werden, weil der Energiebedarf zur Erzeugung der Umwälzbewegung mit zunehmender Schmutzwassermenge ansteigt.

Der Erfindung liegt das Problem zugrunde, einen Sandfang der eingangs genannten Art so zu gestalten, dass sich möglichst zuverlässig und mit einem möglichst geringen Luftbedarf die erforderliche Umwälzbewegung erzeugen lässt.

Dieses Problem wird erfindungsgemäß dadurch gelöst, dass die Abscheidekammer als zylindrischer Stahlbehälter ausgebildet ist und dass unterhalb des Schmutzwassereinlaufes ein Leitblech angeordnet ist, wodurch das durch den Schmutzwassereinlauf einströmende Wasser tangential in die Abscheidekammer eingeleitet wird.

Durch die Anordnung eines Leitbleches unterhalb des Schmutzwassereinlaufes wird zusätzlich die durch die einströmenden Luftblasen erzeugte Zirkulation des Wassers forciert.

Die Ausbildung der Abscheidekammer als zylindrischer Stahlbehälter hat darüber hinaus den Vorteil, dass sie besonders kostengünstig herstellbar ist und als funktionstüchtige Einheit geliefert werden kann. Solche Stahlbehälter sind als genormte Bauteile mit nach außen gewölbten Böden kostengünstig erhältlich.

Durch diese erfindungsgemäße Ausrichtung des Schmutzwassereinlaufes braucht die kinetische Energie des einströmenden Wassers nicht wie in der eingangs genannten Veröffentlichung erläutert mittels einer Prallwand und Wirbelkammer vernichtet werden, vielmehr wird sie zur Erzeugung der Umwälzbewegung wie bei einem Zyklon genutzt. Deshalb kommt die Umwälzbewegung unabhängig von der eingegebenen Druckluft zustande. Die eingegebene Druckluft braucht nur noch die Umwälzbewegung zu unterstützen und über die Länge der Abscheidekammer aufrecht zu erhalten. Deshalb benötigt der erfindungsgemäße Sandfang eine wesentlich geringere Luftmenge, so dass kaum mehr Druckluft erforderlich ist als ohnehin zur Befreiung des Sandes von Fetten und organischen Stoffen. Unter Umständen kann statt mit Druckluft auch mit Druckwasser gearbeitet werden, so dass aus den gemäß der Erfindung vorgesehenen Luftzuführdüsen Wasser unter Druck austritt, was ebenfalls ein Umwälzen des Wassers in der Abscheidekammer bewirkt.

Besonders vorteilhaft ist es, wenn die Luftzuführdüsen mit in Längsrichtung der Abscheidekammer zunehmendem Abstand vom Schmutzwassereinlauf vermehrt vorgesehen sind. Bei einer solchen Anordnung wird optimal berücksichtigt, dass die Umwälzbewegung zunächst primär durch die Energie des quer einströmenden Schmutzwassers erzeugt wird und erst mit zunehmendem Abstand vom Schmutzwassereinlauf die durch Reibung auftretenden Strömungsverluste durch die Energie der Druckluft ausgeglichen werden müssen.

Wenn es auf eine vermehrte Fettabscheidung - beispielsweise in der Lebensmittelindustrie - ankommt, ist es vorteilhaft, wenn an der Auslaufseite in der Abscheidekammer ein Flotationsbereich vorgesehen ist, der zur Erzeugung feiner Luftblasen Luftdüsen geringen Querschnitts aufweist.

Der Sandfang kann zugleich zusätzliche Funktionen ausüben und dadurch als Kompaktanlage ausgebildet werden, wenn gemäß einer anderen Weiterbildung der Erfindung der Schmutzwassereinlauf einen mittels eines Räumers von Rechengut zu befreienden Rechenrost hat. Ein solcher Räumer kann beispielsweise wie in der DE 195 09 738 A1 beschrieben ausgebildet sein, so dass ein vollautomatischer Betrieb möglich ist und das Räumgut seitlich der Abscheidekammer abgeworfen werden kann.

Der Rechenrost wird an seiner Unterseite von dem Wasser in der Abscheidekammer umspült, so dass die Gefahr von Verschmutzungen gering ist, wenn gemäß einer anderen Weiterbildung der Erfindung der Rechenrost zumindest teilweise unterhalb der Füllhöhe der Abscheidekammer verläuft.

Fettstoffe, welche sich in der Abscheidekammer von den Sänden gelöst haben oder im Schmutzwasser frei schweben, bewegen sich aufgrund des Auftriebs zwangsläufig zu einem Ende der Abscheidekammer und können dort leicht abgezogen werden, wenn die Abscheidekammer vom Schmutzwassereinlauf aus gesehen ansteigt.

Besonders vorteilhaft ist es dabei, wenn in der Sandsammelrinne eine Sandtransportschnecke angeordnet ist, welche den Sand zu einer Austragsseite fördert, und wenn durch die Schrägstellung der Abscheidekammer die Sandaustragsstelle oberhalb des Wasserspiegels in der Abscheidekammer liegt. Dadurch kann die Sandtransportschnecke den Sand bis zur Abwurfstelle fördern, so dass keine zusätzliche Transporteinrichtung zum Austrag des Sandes erforderlich wird.

Der Wasserablauf ist optimal gestaltet, wenn er an der dem Schmutzwassereinlauf gegenüberliegenden Seite der Abscheidekammer durch eine quer verlaufende Rinne gebildet ist.

Das Wasser verlässt die Abscheidekammer, ohne in ihr Wirbel zu erzeugen und ohne Schwimmstoffe mitzureißen, wenn gemäß einer anderen Weiterbildung der Erfindung die Rinne an ihrer dem Schmutzwassereinlauf zugewandten Seite eine höher als der maximale Wasserstand in der Abscheidekammer reichende Seitenwand und an ihrer dem Schmutzwassereinlauf abgewandten Seite eine Seitenwand aufweist, die eine Überfallkante bildet, über welche das Wasser in die Rinne läuft.

Alternativ ist es jedoch auch möglich, dass die Seitenwände der Rinne gleich hoch sind und vor der dem Schmutzwassereinlauf zugewandten Seite von oben her eine Tauchwand in die Abscheidekammer ragt. Auf diese Weise erreicht man bei der Rinne zwei Überfallkanten.

Fette und sonstige Schwimmstoffe können separat abgeführt werden, wenn vor der höheren Seitenwand oder der Tauchwand eine Schwimmstoffentnahme angeordnet ist, welche bis kurz unterhalb des normalen Wasserstandes in der Abscheidekammer reicht.

Bei Störungen im Sandfang kann Schmutzwasser diesen problemlos umgehen, wenn vom Schmutzwassereinlauf hinter einer Überfallkante eine Bypass-Leitung zum Wasserablauf führt, die vorzugsweise mit einer Einrichtung zur Grobreinigung des Wassers versehen ist. Hierbei handelt es sich z. B. um einen manuell zu reinigenden Rechenrost mit einer Spaltenbreite von ca. 20 bis 30 mm. Außerdem kann zusätzlich ein überströmbarer Schwebstofffang vorgesehen sein. Anstelle der Überfallkante kann auch ein Schieberventil vorgesehen sein, das geöffnet wird, wenn sich das Wasser vor dem Schmutzwassereinlauf staut.

Das in der Abscheidekammer rotierende Wasser strömt zunächst über eine Beruhigungsstrecke, bevor es mit dem abzuscheidenden Sand zur Sandsammelrinne gelangt, wenn gemäß einer anderen Weiterbildung der Erfindung die Sandsammelrinne zur Seite des Rechenrostes hin in Bezug auf eine senkrechte Mittelachse der Abscheidekammer versetzt ist.

Alternativ zu dem zuvor erwähnten Wasserablauf mit einer quer in der Abscheidekammer verlaufenden Rinne, kann auch ein Überlaufrohr vorgesehen werden, das in eine außen an der Abscheidekammer angebrachte Überlaufrinne einmündet. Dies hat den Vorteil, dass sich die Rotation des Wassers in der zylindrischen Abscheidekammer über deren ganze Länge erstreckt, so dass die Abscheideleistung vergrößert ist.

Vorzugsweise mündet das Überlaufrohr in die Abscheidekammer im Bereich deren Längsachse ein. Dort ist die noch verbleibende Sandkonzentration minimal, so dass praktisch ein sandfreies Wasser der Abscheidekammer entnommen wird.

Die Erfindung lässt verschiedene Ausführungsformen zu. Zur weiteren Verdeutlichung ihres Grundprinzips sind zwei davon schematisch in der Zeichnung dargestellt und werden nachfolgend beschrieben. Diese zeigt in
- Fig.1: einen Querschnitt durch einen Sandfang nach der Erfindung,
- Fig.2: eine Draufsicht auf den Sandfang,
- Fig.3: eine Seitenansicht einer zweiten Ausführungsform des erfindungsgemäßen Sandfangs,
- Fig.4: einen Längsschnitt durch einen geänderten, hinteren Bereich eines Sandfangs,
- Fig.5: eine Draufsicht auf den Bereich nach Fig.4,
- Fig.6: einen Längsschnitt durch eine geänderte Ausführungsform des Sandfangs,
- Fig.7: einen Querschnitt durch die Ausführungsform nach Figur 6.

- Fig.8: einen Querschnitt durch eine alternative Ausführungsform nach Fig. 4.

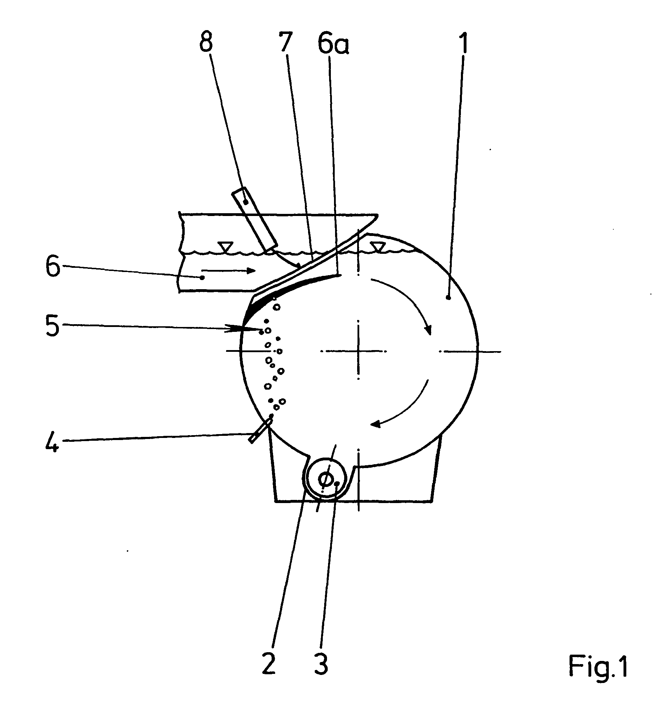

Der in Figur 1 gezeigte Sandfang hat eine Abscheidekammer 1 mit zylindrischem Querschnitt. Diese Abscheidekammer 1 weist im unteren Bereich, in der Zeichnung gesehen nach links hin versetzt eine in Längsrichtung der Abscheidekammer 1 verlaufende Sandsammelrinne 2 auf, in welcher eine Sandtransportschnecke 3 angeordnet ist. An der Seite der Sandsammelrinne 2 sind in der Abscheidekammer 1 hintereinander über ihre gesamte Länge Luftzuführdüsen 4 angeordnet, aus denen durch Zufuhr von Druckluft Luftblasen 5 nach oben steigen.

Ebenfalls auf der Seite der Sandsammelrinne 2 ist an der oberen Seite der Abscheidekammer 1 ein Schmutzwassereinlauf 6 angeordnet. Dieser enthält einen schräg ausgerichteten Rechenrost 7, über dessen Oberseite ein Räumer 8 sich zu bewegen vermag, so dass das Rechengut in einen nicht dargestellten Austrag gelangt. Unterhalb des Rechenrostes ist ein Leitblech 6a angeordnet, das die durch die Luftblasen hervorgerufene Zirkulation unterstützt, indem das durch den Schmutzwassereinlauf 6 einströmende Wasser tangential in die Abscheidekammer 1 eingeleitet wird.

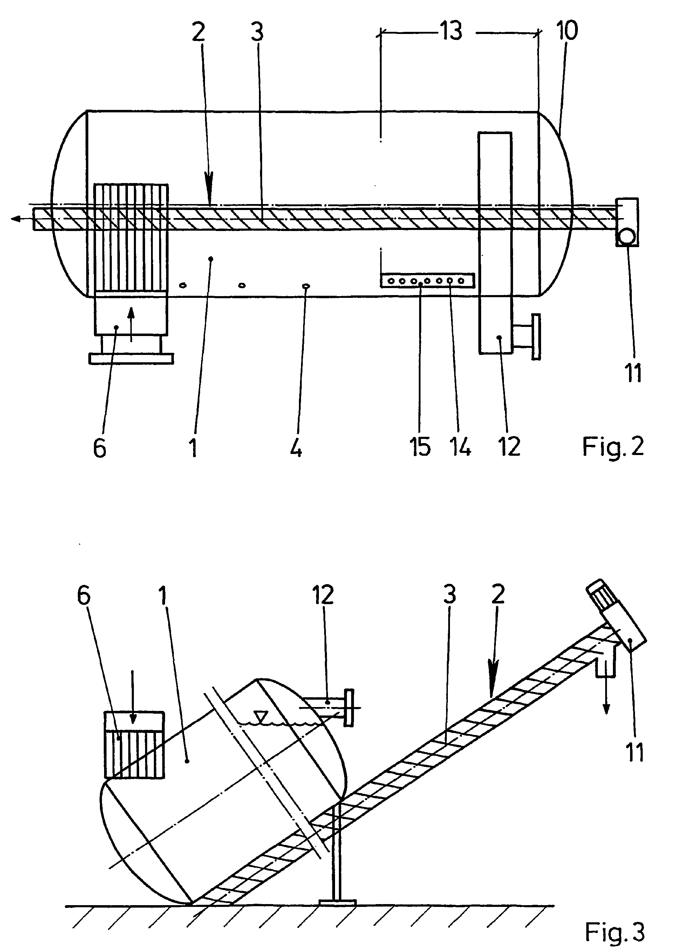

Die Figur 2 lässt erkennen, dass die Abscheidekammer 1 als Stahlbehälter mit nach außen gewölbten Böden 10 ausgebildet ist. Schematisch angedeutet wurde die Sandsammelrinne 2 mit der Sandtransportschnecke 3, welche den abgeschiedenen Sand zu einer Sandaustragsstelle 11 fördert. Weiterhin zu erkennen sind in Figur 2 der Schmutzwassereinlauf 6 an der linken Seite der Abscheidekammer 1 und ein Wasserablauf 12, über den das gereinigte Wasser die Abscheidekammer 1 verlässt.

An der Seite des Wasserablaufes 12 ist in der Abscheidekammer 1 ein Flotationsbereich 13 vorgesehen, der sich vom übrigen Bereich dadurch unterscheidet, dass anstelle der Luftzuführdüsen 4 relativ feine Luftdüsen 14 in einem Luftschlauch 15 vorgesehen sind. Über diese Luftdüsen 14 strömt Luft in Form feiner Luftblasen in das Wasser, so dass es im Flotationsbereich 13 zu einer vermehrten Fettabscheidung kommt.

Bei der Ausführungsform nach Figur 3 steigt die Abscheidekammer 1 vom Schmutzwassereinlauf 6 zum Wasserablauf 12 hin an. Dadurch kann die Sandaustragsstelle 11 so hoch angeordnet werden, dass sie über dem Wasserspiegel in der Abscheidekammer 1 liegt und die Sandtransportschnecke 3 den abgeschiedenen Sand unmittelbar zur Sandaustragsstelle 11 transportieren kann.

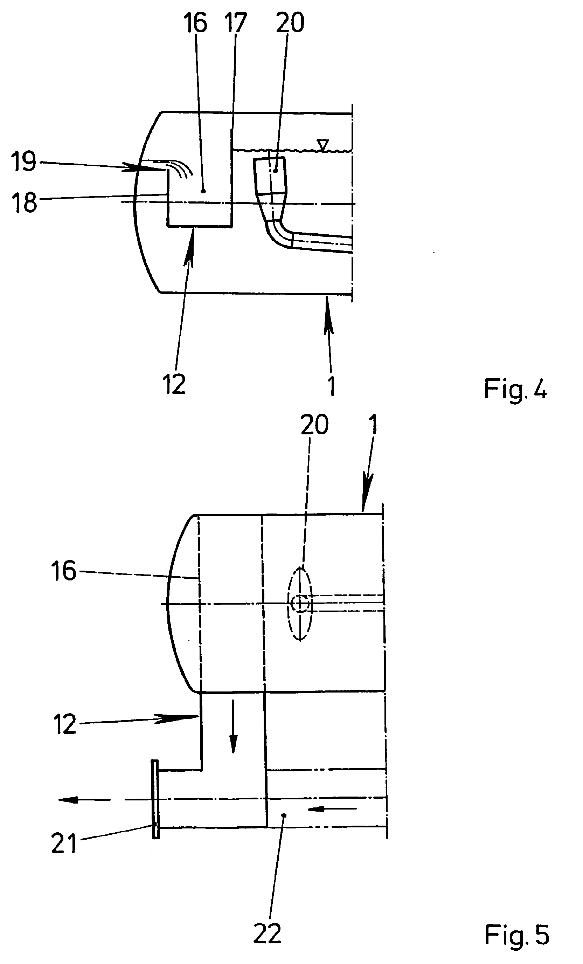

Die Figur 4 zeigt das auslassseitige Ende der Abscheidekammer 1. Der Wasserablauf 12 ist bei dieser Ausführungsform an der dem Schmutzwassereinlauf 6 gegenüberliegenden Seite der Abscheidekammer 1 durch eine quer verlaufende Rinne 16 gebildet. Diese hat zwei Seitenwände 17, 18, von denen die dem Schmutzwassereinlauf 6 zugewandte Seitenwand 17 höher als der maximale Wasserstand in der Abscheidekammer 1 ist. Die Seitenwand 18 an der dem Schmutzwassereinlauf 6 abgewandten Seite ist niedriger und bildet eine Überfallkante 19, über welche das Wasser in die Rinne 16 läuft. Das Wasser gelangt also stets von der Rückseite her in die Rinne, nachdem es zuvor unter der Rinne strömen musste.

Vor der höheren Seitenwand 17 ist eine Schwimmstoffentnahme 20 angeordnet, welche bis kurz unterhalb des normalen Wasserstandes reicht und über die insbesondere Fett und andere Schwimmstoffe abgezogen werden können.

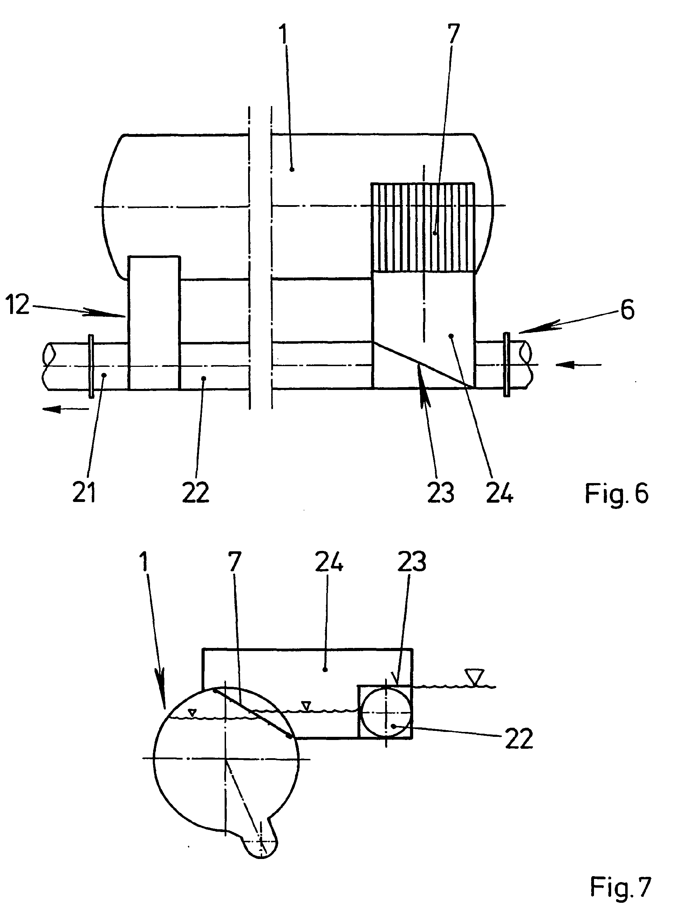

Die Figur 5 verdeutlicht die in Figur 4 gezeigte Gestaltung. Zu erkennen sind die Rinne 16 als Teil des Wasserablaufs 12 und ein Auslassstutzen 21, über den das Wasser die Abscheidekammer 1 verlässt. Weiterhin zeigt die Figur 5 eine zum Auslassstutzen 21 führende Bypass-Leitung 22, deren Bedeutung anhand der Figuren 6 und 7 erläutert wird.

Die Figur 6 lässt erkennen, dass die Bypass-Leitung 22 vom Schmutzwassereinlauf 6 zum Wasserablauf 12 führt. Wenn der Abscheidekammer 1 zu viel Schmutzwasser zugeführt wird, gelangt dieses statt über eine Zulaufrinne 24 und den Rechenrost 7 in die Abscheidekammer 1 über eine Überfallkante 23 in die Bypass-Leitung 22 und von dort unmittelbar zum Wasserablauf 12.

Die Figur 7 zeigt die Zulaufrinne 24, welche zum Rechenrost 7 führt, und die Bypass-Leitung 22 hinter der Überfallkante 23.

In der Bypass-Leitung 22 sind, was hier nicht näher dargestellt ist, eine Grobreinigung und ggf. ein überströmbarer Schwebstofffang eingebaut.

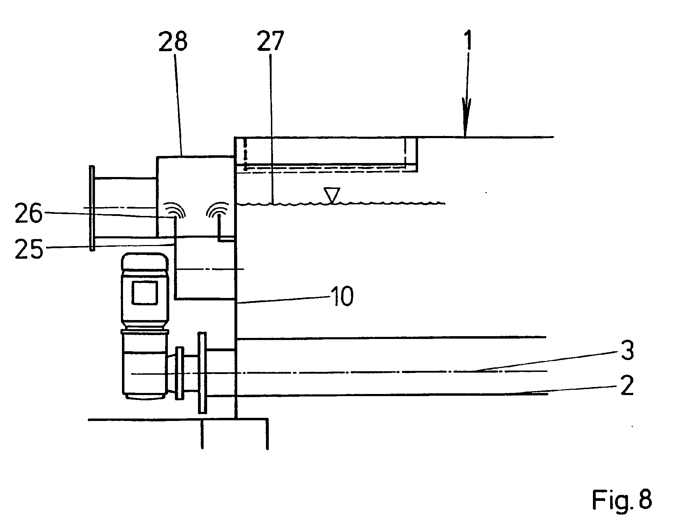

Die Fig. 8 zeigt einen wasserablauf, der eine Alternative zu dem in Fig. 4 dargestellten Wasserablauf bildet. An einer zentralen Stelle am ablaufseitigen Boden 10 der Abscheidekammer 1 setzt axial ein Überlaufrohr 25 an, das nach oben abknickt und dessen Mündung 26 unterhalb des Wasserspiegels 27 in der Abscheidekammer 1 liegt. Das überströmende Wasser wird in einer außen am ablaufseitigen Boden 10 befestigten Überlaufrinne 28 aufgefangen und von dort weitergeleitet. Das Überlaufrohr 25 kann so ausgeführt sein, dass ein Teil der Rohrwand vom ablaufseitigen Boden 10 gebildet ist.

### Bezugszeichenliste

- 1: Abscheidekammer
- 2: Sandsammelrinne
- 3: Sandtransportschnecke
- 4: Luftzuführdüse
- 5: Luftblase

- 6: Schmutzwassereinlauf
- 6a: Leitblech
- 7: Rechenrost
- 8: Räumer
- 10: Boden

- 11: Sandaustragsstelle
- 12: Wasserablauf
- 13: Flotationsbereich
- 14: Luftdüse
- 15: Luftschlauch

- 16: Rinne
- 17: Seitenwand
- 18: Seitenwand
- 19: Überfallkante
- 20: Schwimmstoffentnahme

- 21: Wasserauslassstutzen
- 22: Bypass-Leitung
- 23: Überfallkante
- 24: Zulaufrinne
- 25: Überlaufrohr

- 26: Mündung
- 27: Wasserspiegel
- 28: Überlaufrinne

## Patentansprüche

1. Sandfang mit einer in Längsrichtung durchströmten, einen Schmutzwassereinlauf (6) und einen Wasserablauf (12) aufweisenden Abscheidekammer (1), welche zur Erzeugung einer Umwälzbewegung des Wassers quer zur Längsrichtung der Abscheidekammer (1) an einer Längsseite Luftzuführdüsen (4) hat und im unteren Bereich mit einer in Längsrichtung verlaufenden Sandsammelrinne (2) versehen ist, wobei der Schmutzwassereinlauf (6) zur Erzeugung der Umwälzbewegung des Wassers quer zu der Abscheidekammer (1) im oberen Bereich in diese hineinführt und die Luftzuführdüsen (4) an der Seite des Schmutzwassereinlaufes (6) unterhalb des Schmutzwassereinlaufes (6) vorgesehen sind, **dadurch gekennzeichnet, dass** die Abscheidekammer (1) als zylindrischer Stahlbehälter ausgebildet ist und dass unterhalb des Schmutzwassereinlaufes (6) ein Leitblech (6a) angeordnet ist, wodurch das durch den Schmutzwassereinlauf (6) einströmende Wasser tangential in die Abscheidekammer (1) eingeleitet wird.

2. Sandfang nach Anspruch 1, **dadurch gekennzeichnet, dass** die Luftzuführdüsen (4) mit in Längsrichtung der Abscheidekammer (1) zunehmendem Abstand vom Schmutzwassereinlauf (6) vermehrt vorgesehen sind.

3. Sandfang nach den Ansprüchen 1 oder 2, **dadurch gekennzeichnet, dass** an der Auslaufseite in der Abscheidekammer (1) ein Flotationsbereich (13) vorgesehen ist, der zur Erzeugung feiner Luftblasen Luftdüsen (14) geringen Querschnitts aufweist.

4. Sandfang nach zumindest einem der vorangehenden Ansprüche, **dadurch gekennzeichnet, dass** der Schmutzwassereinlauf (6) einen mittels eines Räumers (8) von Rechengut zu befreienden Rechenrost (7) hat.

5. Sandfang nach zumindest einem der vorangehenden Ansprüche, **dadurch gekennzeichnet, dass** der Rechenrost (7) zumindest teilweise unterhalb der Füllhöhe der Abscheidekammer (1) verläuft.

6. Sandfang nach zumindest einem der vorangehenden Ansprüche, **dadurch gekennzeichnet, dass** die Abscheidekammer (1) vom Schmutzwassereinlauf (6) aus gesehen ansteigt.

7. Sandfang nach Anspruch 6, **dadurch gekennzeichnet, dass** in der Sandsammelrinne (2) eine Sandtransportschnecke (3) angeordnet ist, welche den Sand zu einer Austragsseite fördert, und dass durch die Schrägstellung der Abscheidekammer (1) die Sandaustragsstelle oberhalb des Wasserspiegels in der Abscheidekammer (1) liegt.

8. Sandfang nach zumindest einem der vorangehenden Ansprüche, **dadurch gekennzeichnet, dass** der Wasserablauf (12) an der dem Schmutzwassereinlauf (6) gegenüberliegenden Seite der Abscheidekammer (1) durch eine quer verlaufende Rinne (16) gebildet ist.

9. Sandfang nach Anspruch 8, **dadurch gekennzeichnet, dass** die Rinne (16) an der dem Schmutzwassereinlauf (6) zugewandten Seite eine höher als der maximale Wasserstand in der Abscheidekammer (1) reichende Seitenwand (17) und an ihrer dem Schmutzwassereinlauf (6) abgewandten Seite eine Seitenwand (18) aufweist, die eine Überfallkante (19) bildet, über welche das Wasser in die Rinne (16) läuft.

10. Sandfang nach Anspruch 9, **dadurch gekennzeichnet, dass** die Seitenwände (17, 18) der Rinne (16) gleich hoch sind und vor der dem Schmutzwassereinlauf (6) zugewandten Seite von oben her eine Tauchwand in die Abscheidekammer (1) ragt.

11. Sandfang zumindest einem der vorangehenden Ansprüche, **dadurch gekennzeichnet, dass** vor der höheren Seitenwand (17) oder der Tauchwand eine Schwimmstoffentnahme (20) angeordnet ist, welche bis kurz unterhalb des normalen Wasserstandes in der Abscheidekammer (1) reicht.

12. Sandfang nach zumindest einem der vorangehenden Ansprüche, **dadurch gekennzeichnet, dass** vom Schmutzwassereinlauf (6) hinter einer Überfallkante (23) eine Bypass-Leitung (22) zum Wasserablauf (12) führt.

13. Sandfang nach Anspruch 12, **dadurch gekennzeichnet, dass** in der Bypass-Leitung (22) eine Einrichtung zur Grobreinigung und/oder ein überströmbarer Schwebstofffang vorgesehen ist.

14. Sandfang nach zumindest einem der vorangehenden Ansprüche, **dadurch gekennzeichnet, dass** die Sandsammelrinne (2) zur Seite des Rechenrostes (7) hin in Bezug auf eine senkrechte Mittelachse der Abscheidekammer (1) versetzt ist.

15. Sandfang nach einem der Ansprüche 1 bis 7, **dadurch gekennzeichnet, dass** der Wasserablauf (12) an der dem Schmutzwassereinlauf (6) gegenüberliegenden Seite der Abscheidekammer (1) von einem Überlaufrohr (25) gebildet ist, das in eine außen an der Abscheidekammer angebrachte Überlaufrinne (28) einmündet.

16. Sandfang nach Anspruch 15, **dadurch gekennzeichnet, dass** die Abscheidekammer (1) einen zylindrischen Querschnitt aufweist und dass das Überlaufrohr (25) in die Abscheidekammer (1) im Bereich deren Längsachse einmündet.

## Claims

1. Sand trap with a deposition chamber (1) through which flow passes in the longitudinal direction and which has an inlet (6) for dirty water and a water outlet (12), and which has air supply nozzles (4) on a longitudinal side in order to produce a circulatory movement of the water transversely to the longitudinal direction of the deposition chamber (1) and is provided in the lower region with a sand collecting channel (2) which runs in the longitudinal direction, wherein the inlet (6) for dirty water leads into the deposition chamber (1) in the upper region in order to produce the circulatory movement of the water transversely to the said deposition chamber, and the air supply nozzles (4) are provided on the side of the inlet (6) for dirty water below the inlet (6) for dirty water, **characterised in that** the deposition chamber (1) is formed as a cylindrical steel container and that a deflector plate (6a) is arranged below the inlet (6) for dirty water, by means of which deflector plate the water flowing in through the inlet (6) for dirty water is introduced tangentially into the deposition chamber (1).

2. Sand trap according to Claim 1, **characterised in that** the air supply nozzles (4) are provided in increased numbers with increasing distance from the inlet (5) for dirty water in the longitudinal direction of the deposition chamber (1).

3. Sand trap according to Claims 1 or 2, **characterised in that** a flotation region (13) is provided on the outlet side in the deposition chamber (1), which flotation region has air nozzles (14) of small cross section in order to produce fine air bubbles.

4. Sand trap according to at least one of the preceding claims, **characterised in that** the inlet (6) for dirty water has a screen grill (7) which is to be freed of screened material by means of a scraper (8).

5. Sand trap according to at least one of the preceding claims, **characterised in that** the screen grill (7) runs at least partially under the water level of the deposition chamber (1).

6. Sand trap according to at least one of the preceding claims, **characterised in that** the deposition chamber (1) slopes upwards as seen from the inlet for dirty water (6).

7. Sand trap according to Claim 6, **characterised in that** a sand screw conveyor (3) is arranged in the sand collecting channel (2), which sand screw conveyor conveys the sand to a discharge side, and that the sand discharge point lies above the water level in the deposition chamber (1) owing to the slope of the deposition chamber (1).

8. Sand trap according to at least one of the preceding claims, **characterised in that** the water outlet (12) on the side of the deposition chamber (1) opposite the inlet (6) for dirty water is formed by a transverse channel (16).

9. Sand trap according to Claim 8, **characterised in that** the channel (16) on the side facing the inlet (6) for dirty water has a side wall (17) which extends higher than the maximum water level in the deposition chamber (1), and on its side facing away from the inlet (6) for dirty water has a side wall (18) which forms an overflow edge (19), over which the water runs into the channel (16).

10. Sand trap according to Claim 9, **characterised in that** the side walls (17, 18) of the channel (16) are of equal height, and a baffle projects from above into the deposition chamber (1) in front of the side facing the inlet (6) for dirty water.

11. Sand trap according to at least one of the preceding claims, **characterised in that** a floating material removal means (20) is arranged in front of the higher side wall (17) or baffle, which means extends to just below the normal water level in the deposition chamber (1) .

12. Sand trap according to at least one of the preceding claims, **characterised in that** a bypass line (22) leads from the inlet (6) for dirty water behind an overflow edge (23) to the water outlet (12).

13. Sand trap according to Claim 12, **characterised in that** a device for coarse cleaning and/or a trap for suspended material, over which flow can pass, is provided in the bypass line (22).

14. Sand trap according to at least one of the preceding claims, **characterised in that** the sand collecting channel (2) is offset towards the side of the screen grill (7) in relation to a vertical centre axis of the deposition chamber (1).

15. Sand trap according to one of Claims 1 to 7, **characterised in that** the water outlet (12) on the side of the deposition chamber (1) opposite the inlet (6) for dirty water is formed by an overflow pipe (25) which opens into an overflow channel (28) attached to the outside of the deposition chamber.

16. Sand trap according to Claim 15, **characterised in that** the deposition chamber (1) has a cylindrical cross section and that the overflow pipe (25) opens into the deposition chamber (1) in the region of the longitudinal axis thereof.

## Revendications

1. Dessableur, avec une chambre séparatrice (1) irriguée en direction longitudinale, comportant une entrée d'eau usée (6) et un écoulement d'eau (12), qui pour générer un mouvement de recirculation de l'eau possède à la transversale de la direction longitudinale de la chambre séparatrice (1) sur un côté longitudinal des buses d'amenée d'air (4) et qui dans la zone inférieure est munie d'une rigole collectrice de sable (2) s'étendant en direction longitudinale, pour générer le mouvement de recirculation de l'eau, l'entrée d'eau usée (6) conduisant dans la zone supérieure de la chambre séparatrice (1) à la transversale de cette dernière et les buses d'amenée d'air (4) étant prévues sur le côté d'entrée d'eau usée (6) sous l'entrée d'eau usée (6), **caractérisé en ce que** la chambre séparatrice (1) est conçue sous la forme d'un réservoir d'acier cylindrique et **en ce qu'**en dessous de l'entrée d'eau usée (6) est placée une chicane (6a) à travers laquelle l'eau affluant dans l'entrée d'eau usée (6) est introduite de façon tangentielle dans la chambre séparatrice (1).

2. Dessableur selon la revendication 1, **caractérisé en ce que** les buses d'amenée d'air (4) sont prévues de façon multiple, avec un écart par rapport à l'entrée d'eau usée (6) croissant en direction longitudinale de la chambre séparatrice (1).

3. Dessableur selon les revendications 1 ou 2, **caractérisé en ce que**, sur le côté d'écoulement, dans la chambre séparatrice (1) est prévue une zone de flottage (13) qui pour créer de fines bulles d'air comporte des buses d'air (14) de faible section transversale.

4. Dessableur selon au moins l'une quelconque des revendications précédentes, **caractérisé en ce que** l'entrée d'eau usée (6) a une grille de retenue (7) qui doit être débarrassée de produits à retenir au moyen d'un racleur (8).

5. Dessableur selon au moins l'une quelconque des revendications précédentes, **caractérisé en ce que** la grille de retenue (7) s'étend au moins en partie en-dessous de la hauteur de remplissage de la chambre séparatrice (1).

6. Dessableur selon au moins l'une quelconque des revendications précédentes, **caractérisé en ce que**, vue à partir de l'entrée d'eau usée (6), la chambre séparatrice (1) remonte.

7. Dessableur selon la revendication 6, **caractérisé en ce que** dans la rigole collectrice de sable (2) est placée une vis de transport de sable (3) qui convoie le sable vers un côté de sortie, et **en ce que** du fait de la position inclinée de la chambre séparatrice (1), le point d'évacuation du sable se situe au-dessus du niveau d'eau dans la chambre séparatrice (1).

8. Dessableur selon au moins l'une quelconque des revendications précédentes, **caractérisé en ce que** sur le côté de la chambre séparatrice (1) opposé à l'entrée d'eau usée (6), l'écoulement d'eau (12) est créé par une rigole s'étendant à la transversale (16).

9. Dessableur selon la revendication 8, **caractérisé en ce que** la rigole (16) comporte sur le côté faisant face à l'entrée d'eau usée (6) une paroi latérale (17) arrivant plus haut que le niveau d'eau maximal dans la chambre séparatrice (1) et sur son côté opposé à l'entrée d'eau usée (6) une paroi latérale (18) qui forme un rebord de déversement (19) par dessus lequel l'eau s'écoule dans la rigole (16).

10. Dessableur selon la revendication 9, **caractérisé en ce que** les parois latérales (17, 18) de la rigole (16) sont de hauteur égale et **en ce qu'**avant le côté faisant face à l'entrée d'eau usée (6), une paroi plongeante saillit à partir du haut dans la chambre séparatrice (1).

11. Dessableur selon au moins l'une quelconque des revendications précédentes, **caractérisé en ce qu'**avant la paroi latérale (17) la plus haute ou la paroi plongeante est placé un système de prélèvement de matières surnageantes (20) qui arrive jusque peu sous le niveau d'eau normal dans la chambre séparatrice (1) .

12. Dessableur selon au moins l'une quelconque des revendications précédentes, **caractérisé en ce qu'**un conduit de dérivation (22) conduit de l'entrée d'eau usée (6) derrière un rebord de déversement (23) vers l'écoulement d'eau (12).

13. Dessableur selon la revendication 12, **caractérisé en ce que** dans le conduit de dérivation (22) est prévu un dispositif pour le nettoyage grossier et/ou un séparateur submersible de matières en suspension.

14. Dessableur selon au moins l'une quelconque des revendications précédentes, **caractérisé en ce que** la rigole collectrice de sable (2) est décalée vers le côté de la grille de retenue (7) par rapport à un axe médian perpendiculaire de la chambre séparatrice (1).

15. Dessableur selon l'une quelconque des revendications 1 à 7, **caractérisé en ce que** sur le côté de la chambre séparatrice (1) qui est opposé à l'entrée d'eau usée (6), l'écoulement d'eau (12) est formé par un tuyau de trop-plein (25) qui débouche dans une rigole de débordement (28) montée à l'extérieur sur le chambre séparatrice.

16. Dessableur selon la revendication 15, **caractérisé en ce que** la chambre séparatrice (1) comporte une section transversale cylindrique et **en ce que** le tuyau de trop-plein (25) débouche dans la chambre séparatrice (1), dans la zone de son axe longitudinal.
